# EUROPEAN PATENT SPECIFICATION

(11) **EP 0 515 428 B1**
(45) Date of publication and mention of the grant of the patent: **29.03.1995**
(21) Application number: 91903416.5
(22) Date of filing: 11.02.1991
(51) Int. Cl.: G03B 1/60, G03B 27/62

(54) **DETERMINING WEB POSITIONS**
BESTIMMUNG DER FILMPOSITION
DETERMINATION DE POSITIONS DE BANDES

(30) Priority: 14.02.1990 GB 9003284
(43) Date of publication of application: 02.12.1992
(73) Proprietor: KODAK LIMITED, Harrow, Middlesex HA1 4TY (GB); EASTMAN KODAK COMPANY, Rochester, New York 14650-2201 (US)
(72) Inventor: RIDER, Christopher Barrie, Surrey CR4 3DQA (GB)
(74) Representative: Mackett, Margaret Dawn
(86) International application number: EP9100284
(87) International publication number: WO9112557

(56) References cited:
- EP-A- 0 364 991
- DE-A- 2 618 363
- DE-A- 3 826 152

## Description

This invention relates to determining web positions, and is more particularly concerned with determining a position along a film comprising sprocket holes or other perforations.

In a photofinishing establishment, customer films are processed (either singly or spliced into a roll) then printed. During the printing operation, picture frames must be aligned with the printer gate before a print can be made. With film in the 110 and 126 formats, having a single perforation per frame, the frame is assumed always to be in the same position relative to the perforation. Various methods are known for locating film on a frame-by-frame basis. However, in the 35mm film format there is more than one perforation per frame and the frames, as exposed, are shifted unpredictably in relation to their nominal position having reference to the sprocket holes, e.g. due to variability in camera frame advance mechanism. Accordingly, an alignment procedure is necessary for each frame before printing from it. There are two methods of alignment procedure currently in use.

The first method is a manual alignment procedure commonly used in a mini-lab environment where films are printed singly. The printer will often give a nominal 38mm advance after a frame has been printed. It is then up to the operator to make a fine adjustment to the alignment of the next frame with the gate if necessary. Although this method can be very accurate, it results in operator fatigue and wastes operator time.

A second method involves automatic notch production and detection. This is the preferred method of a bigger photofinishing laboratory, where high-speed printers are used. Spliced rolls of films are passed through a notching machine which scans them to measure optical density, locates the picture frames by analysing the density data for frame edges and mechanically punches a small notch out of one edge of the film to indicate the position of each frame. The notched roll is then passed through the printer, where a sensor detects each notch and aligns the corresponding frame in the printer gate automatically. This method is usually quite adequate for ordinary photofinishing tolerances but is only as accurate as the notching machine.

There will occasionally be films, however, which defeat the notching machine's frame-finding algorithm and are printed out of alignment. In such cases, individual makeovers (repeat prints made to correct faults) will need to be made manually or, in extreme cases, if the notching machine develops a fault, the whole roll may need to be notched again along the unnotched edge. Other disadvantages with this method are that the extra time is required for the notching step and that an increased level of film scratches and dust pick-up may be caused as a result of the extra handling.

The two methods just described are particular examples of cases in which it is necessary to determine the position along a film of the beginning of each frame.

These methods of such determination are applicable to printing. There are in fact several types of film handling equipment which have to make such a determination, this being done by a scan of the film for image density at one station in order to operate on the film at a second station remote from the first. This is true for three main types of photofinishing equipment currently on the market, namely, printers (in which the operating station is the printer gate where the exposure on to photographic paper is made), notching machines (in which the operating station is the punch where the film is notched) and slide-mounters (in which the operating station is the slide-mounting press itself where the film is cut and mounted).

In all these cases, the film is first scanned for image density at the scanning station, then moved to the operating station for the next step to be performed. One problem which arises is that of identifying the position of a point on the film at the scanning station where a particular scanned datum occurs, e.g. an image density measurement or the beginning of a frame, so that this point can be identified when the film is moved to a second (operating) station, e.g. to determine that this point has reached the operating station or a given position at that station so that the relevant operation can be carried out.

Two methods are commonly used to relate the scanned data to their position on the film. In the first method, a required frame of notched film is located in the scanning station by means of its notch and scanned to identify data to be used in the operating station, the position of the data being measured in relation to the notch. The frame is then moved to the operating station where it is again located by means of the same notch and the position of the required data can then be identified. This method cannot, of course, be used with notching machines. This is because, when the film is scanned, there is not yet a notch to which to relate the scanned data.

In the second method, there is a fixed distance between the two stations. The film parameter of interest (e.g. image density) at a particular point is first determined in the scanning station, then the film is moved the fixed distance between the scanning station and the operating station to locate this point correctly at the operating station. The distance that the film is moved is measured by an indirect method, e.g. by counting film drive roller steps derived from a shaft encoder or by actuating the film drive motor for a fixed time. Both of such indirect methods are somewhat inaccurate.

It is therefore an object of the present invention to provide a more accurate method of determining the position along a web.

In the present invention, sprocket holes constitute a ready-made standard of distance along a film with a high degree of accuracy.

DE-A-38 26 152 discloses a method for determining the position of a particular image frame on a film. The method comprises counting the number of sprocket holes or perforations along the film to obtain a rough position of the image frame, and also counting the number of drive pulses supplied to a stepper motor in order to determine intervals smaller than that between adjacent sprocket holes or perforations to fine tune the position of the particular image frame.

According to one aspect of the present invention, there is provided a method of determining a position along a web from a defined position on the web which includes a plurality of indications spaced apart along the web at accurately equal intervals regardless of content of the web, the plurality of indications constituting a fiduciary standard, the method comprising:-
determining an integer number of the accurately equal intervals by means of detecting means positioned relative to the web; and
determining a smaller interval which is less than the accurately equal intervals;
the position along the web being defined by adding the integer number of equal intervals to the smaller interval;
characterized in that the equal intervals and the smaller intervals are both determined by the detecting means from the position of one or more of the fiduciary indications;
and in that the detecting means has a plurality of apertures aligned to detect the occurrence of the fiduciary indications or a single aperture the output from which is continuously varying in amplitude as the web is moved relative to the detecting means.

The invention may have application to webs other than film, e.g. paper, and may have application to other fiduciary indicators than perforations, e.g. blocks of DX bar code.

Rather than punching a reference mark on the film such as a notch, particularly in a variable position, the present invention, at least in the embodiments hereinafter illustrated, seeks to use reference marks already present on 35mm film, namely the perforations known as sprocket holes. These are punched out of the film at 4.75mm intervals, according to the ISO standard for 35mm film. There are therefore 8 holes for every 38mm, a distance corresponding to a typical camera advance. Thus, the sprocket holes constitute a fiduciary basis for a determination of position which can be combined with a determination of a smaller interval than the fiduciary interval. In this way, a coarse determination is provided due to the fiduciary interval and an incremental or fine determination is provided due to the smaller interval.

The invention can be particularly applied to modern digital techniques if the determination is made to comprise two numbers, one representing the coarse determination and the other representing the incremental determination. For example, the first number may represent the number of sprocket holes counted from a start position along the film. The second number may then relate to the position determined along the film between two sprocket holes. The start position may be referred to the beginning of a film spliced into a roll, or the beginning of such a roll, and may be determined by any one of several methods, some of which are exemplified hereinafter. In one such method that is particularly useful in practice, the start position is defined by indicator means attached to the film, rather than for example defining the start position as the first sprocket hole that happens to be encountered on the film.

As the coarse determination is made to a high degree of accuracy, the incremental determination need not be anything like as accurate in proportion to the size of the increment. It is therefore particularly economical for the incremental determination to be made by means of positional feed-back information from drive means for the film.

However, an alternative very useful embodiment combines the coarse fiduciary determination with the incremental determination by making the incremental determination also by means of detecting the position of one or more of the sprocket holes. (In this case, the incremental determination can be fractional in the sense that it is a definite fraction of the actual fiduciary interval.) Since the drive means are no longer needed for the incremental positional information, they can be relatively small, simple and inexpensive, e.g. using a D.C. motor instead of an expensive stepper motor or shaft encoder, and the same detector means can be used for both the coarse and the incremental determinations.

One method of effecting this that is particularly neat is to use two detectors spaced apart so that they are positionally out of phase with each other with respect to detecting the sprocket holes. This arrangement requires very little detecting apparatus and the necessary analysis of the output signals from the two detectors can be effected readily. A particularly efficient analysis is made possible if there is effected a subtraction between the outputs from the respective detectors.

Alternatively, the detecting can be effected by means of a linear detector arranged parallel to the direction of motion of the film, which simplifies the analysis but uses a more involved detector. This detector may comprise an analogue centroid detector in which the position along the detector of the centroid of a spot of light is detected by analogue means, such detectors being known. A particularly simple analysis can be made when the array comprises pixels and the incremental position is denoted by the pixel (or pixel pair) detecting a sprocket hole edge.

It is conceivable that the determination of position of the identified or measured data is simply transferred from one station to the other without a total measurement of the position being effected. For example, this may be done by using the number of sprocket holes separating the two stations along the path of the film, for the coarse determination, together with an analogue of the incremental position beyond a particular sprocket hole. More usually, the invention will be applied to the determination being an absolute measurement. This gives improved accuracy, reliability and reproducibility. While the measurement of the position can be stored at a location on the film, the last-mentioned method allows it to be stored at a location off the film so that, for example, the film need not be cluttered with temporary information which is of no use once the processing has finished.

The data concerned at the identified position will usually be relevant to a particular frame of the film, in which case the data at the position can be stored in association with information identifying the frame. For example, the data may comprise identification of the beginning of the frame. Variations of this will be apparent to one skilled in the art.

Further features of embodiments of the invention will now be described, by way of example only, to the accompanying drawings in which:-
Figure 1 is a schematic diagram of an arrangement not embodying the invention;
Figure 2 is a schematic perspective view of another arrangement not embodying the invention;
Figure 3 is a schematic diagram of a further arrangement not embodying the invention;
Figure 4 is a graph illustrating output of the Figure 3 arrangement;
Figure 5 is a schematic diagram illustrating the development of the Figure 3 embodiment;
Figure 6 is a schematic diagram of a first embodiment of the invention;
Figure 7 is a graph of an output of the Figure 6 embodiment;
Figure 8 is a schematic diagram of a variation of the Figure 6 embodiment;
Figure 9 is a graph illustrating an output of the Figure 8 embodiment;
Figure 10 is a schematic diagram of a development of the Figure 6 embodiment;
Figure 11 is a graph illustrating outputs of the Figure 10 embodiments;
Figure 12 is a graph illustrating an output of a particular form of the Figure 10 embodiment; and
Figure 13 is a schematic diagram of a third embodiment of the invention.

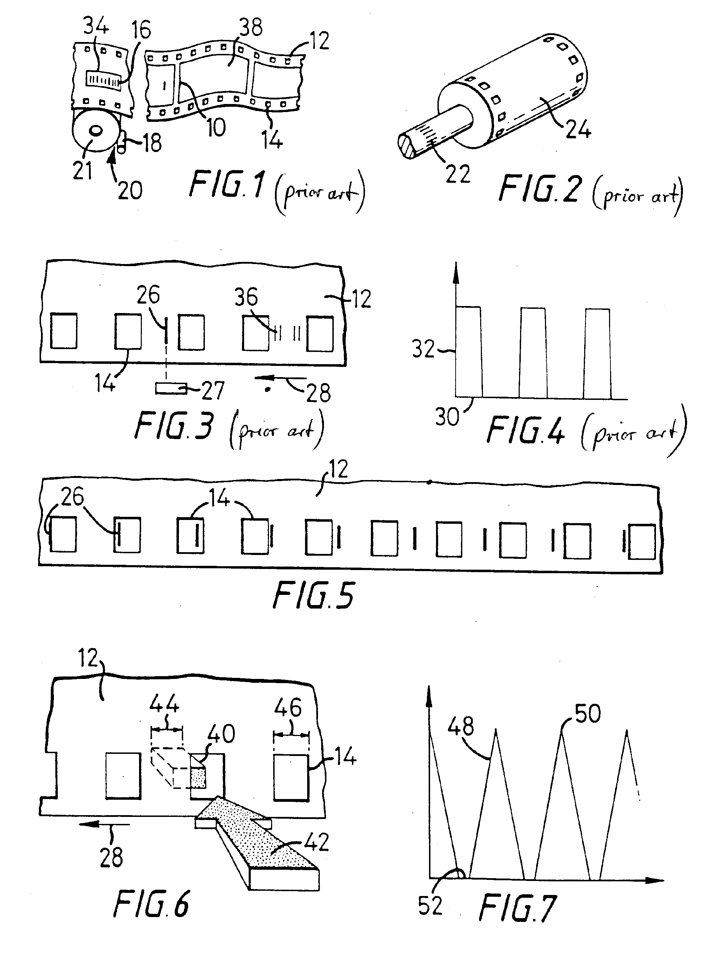

With reference to the accompanying drawings and in accordance with the foregoing discussion, it is desired to determine a position 10 along a film 12 which includes sprocket holes 14. With 35mm film according to the I.S.O. standard, these sprocket holes are punched out of the film at 4.75mm intervals so that there are eight holes for every 38mm, a distance corresponding to a typical camera advance. In order to identify the position 10, it might be thought sufficient to measure the distance of advance of the film from a start position 16 to the position 10, e.g. by using positional feed-back information from e.g. a connected counter 18 of drive means 20. However, there will usually be slippage and perhaps indeterminate motion due to cogging and such a measurement is unreliable as the drive drum 21 is usually a friction drum. The arrangement shown in Figure 1 is not in accordance with the invention.

In order to overcome this disadvantage, there can be used instead of the usual friction drive drum 21 (or at some other point as an idler) a drum 24 having sprockets so that it is thereby keyed to the film to rotate with motion of the film with no slippage therebetween, as illustrated in Figure 2, and shaft encoder means 22 (having much finer divisions than can be shown in the drawing) can be rigidly attached to the sprocket drum 24 for the film 12, which will ensure that the shaft encoder means 22 serve for making a combination of a coarse fiduciary determination using the sprocket holes of the film and an incremental determination using the fine divisions of the shaft encoder means 22.

However, in many cases, it will not be convenient to have shaft encoder means such as 22 attached rigidly to a sprocket drum 24, e.g. when it is a case of adapting an existing machine or modifying a manufacturing technique to provide such encoder means 22. In accordance, therefore, with a much more useful and generally applicable aspect of the invention, embodiments are provided which actually detect the sprocket holes 14 in the film 12.

In Figure 3, a slit-shaped detector 26 is provided perpendicular to the direction of travel of the film 12, as indicated by arrow 28. The detector 26 is positioned on one side of the film 12 and a suitable light source (not shown) is positioned on the opposite side of the film 12 to co-act with the detector 26. The output of detector 26 is shown in Figure 4 with the abscissa 30 showing the distance along film 12 and the ordinate 32 showing the magnitude of output from detector 12. Figure 3 shows the aperture of detector 26, this being in the form of a slit parallel to the longer side of a sprocket hole 14 and it will be apparent that the film position can be specified by this means only at the beginning and at the end of each sprocket hole, i.e. at positions which are 2.75mm apart corresponding to the gap between adjacent perforations or 2.0mm apart corresponding to the perforation width. Thus, detector 26 serves for determining a number (corresponding to the number of sprocket holes) representing the fiduciary coarse determination. This can be effected as a count of sprocket holes from a start position 16 along the film 12. The same slit detector 26 can determine the start position of a film spliced into a roll of such films in response to sensing an indicator 34 positioned at the start of that particular roll (see Figure 1). The indicator 34 may be a self-adhesive label attached to the beginning of a film, as shown in Figure 1, or it could be a mark on the film. Alternatively, it could be the leading edge of the film (separated by a gap from the trailing edge of the preceding film in the roll) or it could be any conveniently detectable point intermediate the ends of the film, an appropriate detector being used in each case to detect the indicator as will be apparent to one skilled in the art.

In the embodiment shown in Figure 2, some sort of means responsive to positional feed-back information from drive means 20 for the film can be used for the incremental determination. These may be a counter such as 18 or a shaft encoder providing pulses or a stepper motor the steps of which determine the incremental position. The latter may be used either for measuring a position 10 of film 12 or for moving film 12 until a position 10 thereon is at a required place. The output from detector 26 is highly accurate since the sprocket holes 14 constitute a fiduciary system and any errors in the incremental determination are negligible since they only accrue from the nearest sprocket hole. Thus, this embodiment provides location co-ordinates of position 10 on film 12 in the form of two numbers, one giving the perforation count (corresponding to the number of sprocket holes) since the start position 16 of the film 12, and the other giving the incremental measurement since the last perforation. The latter number will usually be digital, being a count of pulses from a shaft encoder, stepper motor or the like.

The slit detector 26 can, by virtue of its configuration, be used to read also information 36, as shown in Figure 3 which is recorded optically between the sprocket holes. For example, the camera (not shown) taking the picture recorded in a frame 38 on film 12 (Figure 1) might also record the date of the exposure of that picture out of the picture area, e.g. in the frame area between the sprocket holes 14. This date may be encoded, for example, as a series of bars 36.

Again, since the technology of detector 26 required to detect the edges of holes 14 is essentially the same as that for reading bar codes, the same detector 26 could be designed to combine the function of detecting the edges of sprocket holes 14 and reading a DX bar code.

The latter can lead to a further modification of this embodiment. The DX code comprises two tracks of information, one of "clock" type and the other carrying data. The clock track comprises a series of bars with equal mark/space ratio providing a resolution of 0.5mm. This track is provided to help in reading the data track. However, it can also be used as a distance scale for location co-ordinates for the above-mentioned incremental determination. However, this track would be not sufficient on its own for total determination of the position 10 since the DX tracks are not continuous along the whole length of the film and, indeed, might be completely obscured in places where the film 12 being scanned has edge fogging. Of course, if such fogging occurs at a place where the incremental determination is to be made, some other means of making the incremental determination will be required.

In a development of the slit detector method, a plurality of slits can be arranged at intervals slightly greater (or less) than the intervals of occurrence of the sprocket holes 14. This is illustrated in Figure 5. By this method, a Vernier arrangement is produced so that, for example, if there are nine detectors 26 spaced at intervals of 0.9 times the sprocket hole interval, then only one of these will show an edge of a sprocket hole at a time, and these successively, so that intervals of one-tenth of a sprocket hole interval can be determined. Alternatively, a plurality of such slit detectors 26 can be arranged at intervals equal to the sprocket hole intervals, whereby to avoid error from, say, one or two sprocket holes that might be damaged, the output being taken as the average or, preferably, simultaneous edge detection by a majority of the slit detectors.

In cases in which positional feed-back information from drive means for the film is not available for the incremental detection, for example, a detector can be designed to take account of the sprocket holes alone for the both the coarse determination and the incremental determination. Therefore, according to another embodiment, means for detecting the position of the sprocket holes 14 comprises, as shown in Figure 6, a detector 40 (of which only the aperture is shown in the drawing) co-operating with a light source 42 (shown diagramatically). To maximise the positional information obtainable, the detector 40 has an aperture with the same width 44 parallel to the direction of travel 28 of film 12 as the width 46 of sprocket holes 14. The output of the detector 40 is shown in Figure 7, the axes of which correspond to those of Figure 4.

The incremental determination is made by determining (digitally or otherwise) the magnitude of output signal 48 and determining on which side of the relevant peak 50 the required point falls, e.g. by using a slope detector. It will be apparent that there is an interval 52, while the detector 40 is between adjacent sprocket holes 14, during which no incremental determination is being made. This lacuna can be overcome in several ways.

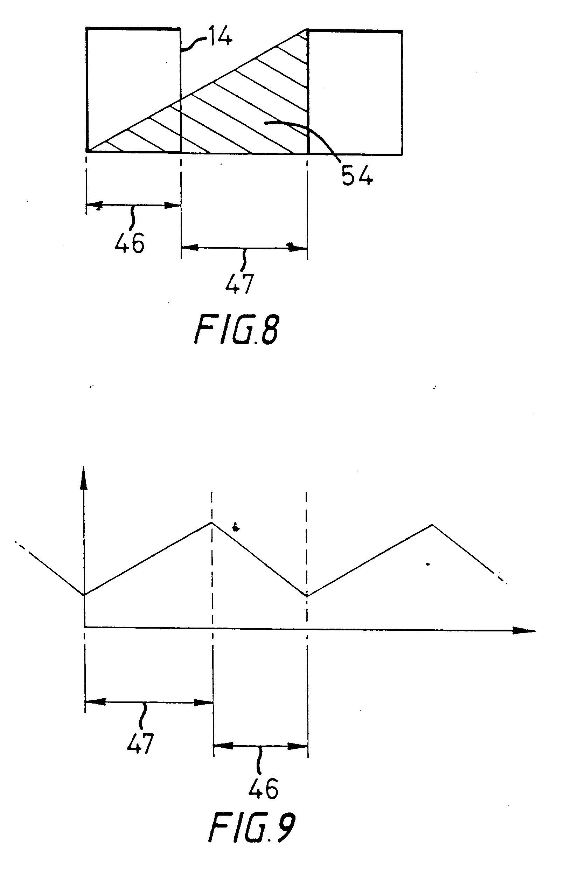

One method is to vary the height of the aperture of the detector 40 and to extend its dimension 44, e.g. as shown for detector 54 (again only illustrated by its aperture) in Figure 8. This produces an output, one period of which is illustrated in full lines in Figure 9, whose axes correspond to those of Figure 4. The aperture of the detector 54 has a length along the film equal to at least the larger of the perforation width 46 and the spacing 47 between perforations 14 and preferably has a length equal to the sum of these, i.e. the perforation pitch, in which case the output signal shown in Figure 9 is linear rather than parabolic.

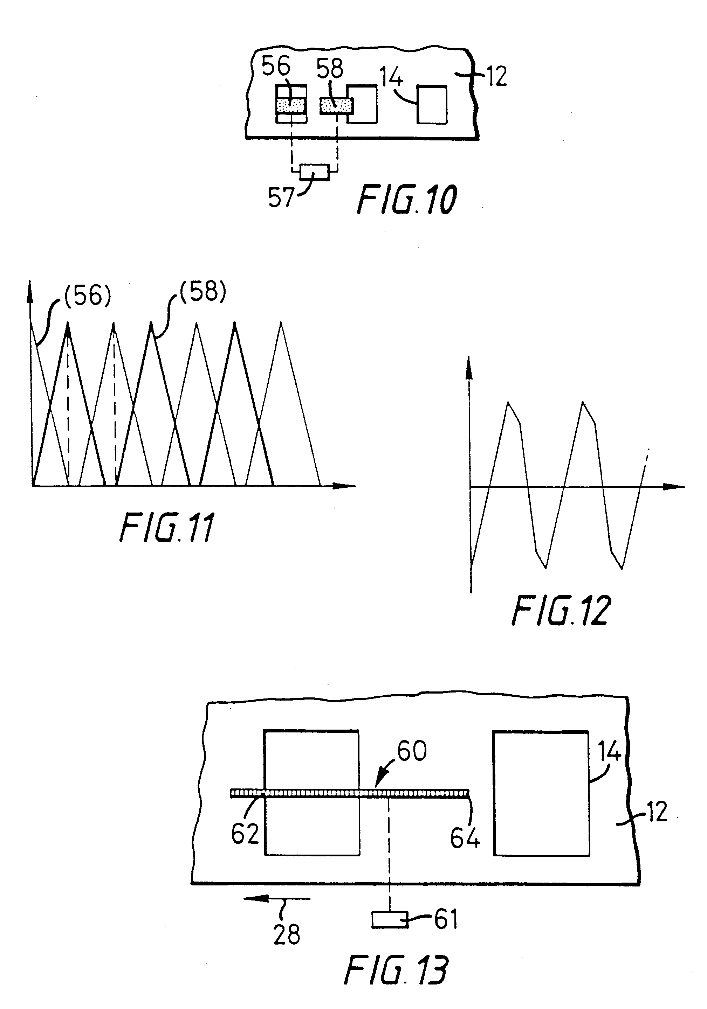

Another method is to provide two detectors 56, 58, as shown in Figure 10, each similar to detector 40. Detectors 56, 58 have respective apertures spaced apart so that they are positionally out of phase with each other with respect to detecting the sprocket holes 14, i.e. so that they do not both give the same output at the same time. The outputs from detectors 56 and 58 can be combined in any suitable manner. For example, one can be used during the intervals 52, when the other is ineffective. Again, the two outputs can be combined by logic means to identify uniquely the incremental measure of the position 10 on film 12. Yet again, the outputs can be combined by means 57 effecting a subtraction between them. The outputs are shown in Figure 11 and the subtraction in Figure 12, the axes again corresponding to those of Figure 4.

While, in relation to the embodiments described with reference to Figures 6, 7, 10, 11 and 12, the apertures of detectors 40, 56 and 58 have been described as having a width 44 equal to the width 46 of sprocket holes 14. If the detectors are positioned carefully, it is sometimes possible to have a tolerance on the aperture size. This is also equivalent to there being some tolerance on the size of the sprocket holes 14 which, to some extent, can therefore compensate for irregularities in these due to damage to the film 12. Further, it will be appreciated that the embodiment shown in Figure 10 can be adapted by the provision of more detectors like 56 and 58, spaced apart at suitable intervals, to act in the manner described above with reference to the Figure 3 embodiment to discount damaged sprocket holes 14 or again to act like the aforesaid Vernier means. In such cases, for example, the detectors may be arranged in a series of pairs like 56, 58 or again as a series of single detectors like 40.

A further embodiment can be obtained by using a detector 60, as shown in Figure 13. The detector 60 comprises a linear detector arranged parallel to the direction of motion of the film 12 indicated by arrow 28. The aperture of the detector is as shown in Figure 13. It may be an analogue centroid detector as described above or it may comprise a linear array of pixels 62 or may be a coherent image guide with its elements connected to an array of pixels (which then need not themselves be linearly arranged nor parallel to direction 28). As the film moves, the image of the sprocket hole 14 travels across the detector 60 and the position 10 can then be related in the pixel embodiments to the number of a particular pixel 62 (or coherent element 62 connected to a pixel) where the edge of the sprocket hole 14 falls. The sprocket holes may be counted when their leading edge falls on the first pixel or element 64 and any position 10 on film 12 may then be specified in terms of the whole number of sprocket holes 14 having passed pixel or element 64 together with the incremental number of pixels from pixel or element 64 to the pixel or element on which the leading edge of sprocket hole 14 falls when the position 10 is detected.

It will be apparent that these embodiments can be used to determine a position 10 in relation to film 12 and can also be used to move film 12 until it is so located that position 10 is at a required place, e.g. for the operations hereinbefore described. For the latter purpose, the output or outputs from the relevant detector are compared with the value or values corresponding to the required position 10 during the initial scan.

Any of the methods described above with reference to Figures 3 to 13 can be used to detect film slip by comparing a film position determined by these embodiments with a film position calculated entirely by means of positional feed-back information from drive means for the film. Film slip has the greatest probability of occurring when the film is moving at its fastest or when its acceleration is greatest. To overcome the latter occurrence, acceleration should always be gradual when starting or stopping the film. The former case (slip at high speed) may arise because torque produced by a stepper motor falls off with increasing speed. By using the signal produced by the sprocket hole detector described in order to count sprocket holes during large quick movements of the film, problems arising from film slip can be eliminated as the film position will always be known accurately to the nearest sprocket hole for the coarse determination and relatively accurately by means of the incremental determination. Indeed, film slip can also be detected as just described and, when it occurs, the motor speed can be reduced accordingly. Again, towards the end of a large film movement, the speed should be reduced so that the probability of film slip is greatly reduced when fine positioning is required. The approach of such end of movement can be calculated from a predetermined measurement of a required position 10 for this purpose and the reduction in film slip can reduce the time to attain the fine position required. A further benefit of using the perforation detector is that cumulative errors of the film transport (drive) can be greatly reduced, especially when large movements of the film are required.

It will be apparent from the foregoing that data processing means 27, 57, 61 can perform any relevant functions, e.g. counting perforations 14, subtracting signals from detectors 56, 58, storing data in a location off the web, and controlling drive means 21 to locate film 12 to a desired position. This can be done by known methods.

## Claims

1. A method of determining a position along a web from a defined position on the web which includes a plurality of indications spaced apart along the web at accurately equal intervals regardless of content of the web, the plurality of indications constituting a fiduciary standard, the method comprising:-
determining an integer number of the accurately equal intervals by means of detecting means positioned relative to the web; and
determining a smaller interval which is less than the accurately equal intervals;
the position along the web being defined by adding the integer number of equal intervals to the smaller interval;
characterized in that the equal intervals and the smaller intervals are both determined by the detecting means from the position of one or more of the fiduciary indications;
and in that the detecting means has a plurality of apertures aligned to detect the occurrence of the fiduciary indications or a single aperture the output from which is continuously varying in amplitude as the web is moved relative to the detecting means.

2. A method according to claim 1, characterized in that the detecting means includes two apertures spaced apart so that they are positionally out of phase with each other with respect to detecting the fiduciary indications.

3. A method according to claim 2, characterized in that a subtraction is made between outputs from the detecting at the respective positions.

4. A method according to claim 1, characterized in that the detecting means includes nine apertures which are arranged along the web to form a vernier arrangement to determine the smaller interval.

5. A method according to claim 1, characterized in that the detecting means extends substantially parallel to the direction of motion of the web and has a length which is equal to or greater than one of the accurately equal intervals.

6. A method according to claim 5, characterized in that the detecting means comprises an analogue centroid detector.

7. A method according to claim 5, characterized in that the detecting means comprises an array of pixels and the smaller interval is denoted by at least one pixel detecting an edge of a fiduciary indication.

8. A method according to any one of the preceding claims, characterized in that the integer number of the accurate intervals is determined by counting the fiduciary indications from start indicator means attached to the web.

9. A method according to any one of the preceding claims, characterized in that data found in determining the position are stored in a location off the web.

10. A method according to any one of the preceding claims, characterized in that the web comprises film.

11. A method according to any one of the preceding claims, characterized in that the indications comprise perforations.

12. A method of using a determination made by a method according to any one of the preceding claims, characterized in that the determination is used in bringing the position along the web to a desired location.

13. A method of making photographic copies from a film, characterized in that the film is located for the copying by using a determination made by a method according to any one of claims 1 to 11.

## Patentansprüche

1. Verfahren zum Ermitteln einer Position entlang eines Bandes von einer vorgegebenen Position auf dem Band aus, die unabhängig vom Inhalt des Bandes eine Vielzahl von in genau gleichen Abständen entlang des Bandes angeordneter Zeichen aufweist, die Referenzzeichen bilden, wobei
eine ganzzahlige Anzahl der genau gleichen Abstände von relativ zum Band angeordneten Erkennungsmitteln ermittelt wird,
ein Abstand ermittelt wird, der geringer ist als die genau gleichen Abstände, und
die Position entlang des Bandes bestimmt wird durch Addieren der ganzzahligen Anzahl gleicher Abstände zu dem geringeren Abstand,
**dadurch gekennzeichnet, daß** die gleichen Abstände und die geringeren Abstände von den Erkennungsmitteln anhand der Position einer oder mehrerer der Referenzzeichen ermittelt werden und
die Erkennungsmittel eine Vielzahl von aneinandergereihten Öffnungen aufweisen, die das Vorkommen der Referenzzeichen erkennen, oder eine einzelne Öffnung umfassen, deren Ausgangsamplitude sich kontinuierlich verändert, während sich das Band relativ zu den Erkennungsmitteln bewegt.

2. Verfahren nach Anspruch 1, dadurch gekennzeichnet, daß die Erkennungsmittel zwei voneinander beabstandete Öffnungen aufweisen, die bezüglich der Erkennung der Referenzzeichen außerphasig positioniert sind.

3. Verfahren nach Anspruch 2, dadurch gekennzeichnet, daß ausgehend von der Erkennung der Referenzzeichen an den jeweiligen Positionen eine Subtraktion zwischen den Ausgängen erfolgt.

4. Verfahren nach Anspruch 1, dadurch gekennzeichnet, daß die Erkennungsmittel neun Öffnungen aufweisen, die entlang des Bandes angeordnet sind und eine Feinanordnung zum Bestimmen der Abstände bilden.

5. Verfahren nach Anspruch 1, dadurch gekennzeichnet, daß die Erkennungsmittel sich im wesentlichen parallel zur Bewegungsrichtung des Bandes erstrecken und daß sie gleich lang oder länger sind als einer der genau gleichen Abstände.

6. Verfahren nach Anspruch 5, dadurch gekennzeichnet, daß die Erkennungsmittel einen analogen Schwerpunktdetektor aufweisen.

7. Verfahren nach Anspruch 5, dadurch gekennzeichnet, daß die Erkennungsmittel eine Anordnung von Pixeln umfassen und daß der kleinere Abstand von mindestens einem, den Rand eines Referenzzeichens erkennenden Pixel gekennzeichnet wird.

8. Verfahren nach einem der vorhergehenden Ansprüche, dadurch gekennzeichnet, daß die ganzzahlige Anzahl der genauen Abstände bestimmt wird, indem die Referenzzeichen ab einem an dem Band befestigten Anfangsindikator gezählt werden.

9. Verfahren nach einem der vorhergehenden Ansprüche, dadurch gekennzeichnet, daß beim Bestimmen der Position ermittelte Daten an einem von dem Band entfernten Punkt gespeichert werden.

10. Verfahren nach einem der vorhergehenden Ansprüche, dadurch gekennzeichnet, daß das Band Film aufweist.

11. Verfahren nach einem der vorhergehenden Ansprüche, dadurch gekennzeichnet, daß es sich bei den Zeichen um Perforationen handelt.

12. Verfahren zur Verwendung einer Bestimmung mittels eines Verfahrens nach einem der vorhergehenden Ansprüche, dadurch gekennzeichnet, daß die Bestimmung verwendet wird, um die Position entlang des Bandes an einen gewünschten Punkt zu bringen.

13. Verfahren zum Herstellen fotografischer Kopien von einem Film, dadurch gekennzeichnet, daß der Film zum Kopieren so angeordnet ist, daß eine mittels eines Verfahrens nach einem der Ansprüche 1 bis 11 erfolgende Bestimmung verwendet wird.

## Revendications

1. Procédé pour déterminer une position le long d'une bande à partir d'une position définie sur la bande qui comprend une pluralité d'indications espacées le long de la bande à intervalles précisément égaux indépendamment du contenu de la bande, la pluralité d'indications constituant une norme de référence, le procédé comprenant :
la détermination d'un nombre entier d'intervalles précisément égaux grâce à des moyens de détection positionnés par rapport à la bande; et
la détermination d'un intervalle plus petit qui est inférieur aux intervalles précisément égaux;
la position le long de la bande étant définie en additionnant le nombre entier d'intervalles égaux à l'intervalle plus petit;
caractérisé en ce que les intervalles égaux et les intervalles plus petits sont déterminés tous les deux par les moyens de détection à partir de la position d'une ou plusieurs des indications de référence;
et en ce que le moyen de détection comporte une pluralité d'ouvertures alignées pour détecter la survenance d'indications de référence ou comporte une ouverture unique dont le signal de sortie est continûment variable en amplitude à mesure que la bande se déplace par rapport au moyen de détection.

2. Procédé selon la revendication 1, caractérisé en ce que le moyen de détection comporte deux ouvertures écartées l'une de l'autre de sorte qu'elles sont en position déphasée l'une par rapport à l'autre en ce qui concerne la détection des indications de référence.

3. Procédé selon la revendication 2, caractérisé en ce qu'une soustraction est effectuée entre les signaux de sortie provenant de la détection à leurs positions correspondantes.

4. Procédé selon la revendication 1, caractérisé en ce que le moyen de détection comporte neuf ouvertures qui sont disposées le long de la bande pour former un Vernier destiné à déterminer l'intervalle plus petit.

5. Procédé selon la revendication 1, caractérisé en ce que le moyen de détection s'étend de façon pratiquement parallèle à la direction du déplacement de la bande et a une longueur qui est égale ou supérieure à celle de l'un des intervalles précisément égaux.

6. Procédé selon la revendication 5, caractérisé en ce que le moyen de détection comprend un détecteur analogique "de centre".

7. Procédé selon la revendication 5, caractérisé en ce que le moyen de détection comprend une matrice de pixels et en ce que l'intervalle plus petit est indiqué par au moins un pixel détectant un bord de l'indication de référence.

8. Procédé selon l'une quelconque des revendications précédentes, caractérisé en ce que le nombre entier d'intervalles précis est déterminé en comptant les indications de référence à partir d'un moyen indicateur d'origine fixé à la bande.

9. Procédé selon l'une quelconque des revendications précédentes, caractérisé en ce que les données obtenues en déterminant la position sont emmagasinées dans un emplacement en dehors de la bande.

10. Procédé selon l'une quelconque des revendications précédentes, caractérisé en ce que la bande comprend du film.

11. Procédé selon l'une quelconque des revendications précédentes, caractérisé en ce que les indications comprennent des perforations.

12. Procédé d'utilisation d'une détermination réalisée par un procédé selon l'une quelconque des revendications précédentes, caractérisé en ce que la détermination est utilisée en amenant la position le long de la bande à un emplacement souhaité.

13. Procédé de réalisation de copies photographiques à partir d'un film, caractérisé en ce que le film est positionné pour la reproduction en utilisant une détermination réalisée au moyen d'un procédé selon l'une quelconque des revendications 1 à 11.
